# EUROPEAN PATENT SPECIFICATION

(11) **EP 4 167 727 B1**
(45) Date of publication and mention of the grant of the patent: **20.11.2024**
(21) Application number: 21828060.0
(22) Date of filing: 21.06.2021
(51) Int. Cl.: A01K 27/00, F21V 8/00, D07B 1/14, B65H 75/34, F21Y 115/10, B65H 75/40, F21V 27/00

(54) **AN ILLUMINATED RETRACTABLE STRAP ASSEMBLY**
BELEUCHTETE EINZIEHBARE RIEMENANORDNUNG
ENSEMBLE DE SANGLE RÉTRACTABLE ÉCLAIRÉE

(30) Priority: 22.06.2020 FI 20205649
(43) Date of publication of application: 26.04.2023
(73) Proprietor: Medinoa Oy, 02140 Espoo (FI)
(72) Inventor: ERÄLUOTO, Markku, 02140 Espoo (FI); KUUSISTO, Hanna, 02140 Espoo (FI)
(74) Representative: Primrose Oy
(86) International application number: PCT/FI2021/050469
(87) International publication number: WO 2021/260267

(56) References cited:
- WO-A1-2020/193866
- CN-Y- 2 867 856
- CN-Y- 201 062 786
- JP-U- S51 154 353
- US-A1- 2005 128 769
- US-A1- 2005 172 914
- US-A1- 2011 075 403
- US-A1- 2011 120 388
- US-A1- 2015 316 698
- US-B1- 6 694 665
- No further relevant documents disclosed

## Description

### FIELD OF THE INVENTION

The present invention relates to an illuminated strap assembly and more particularly to an illuminated strap assembly according to preamble of claim 1.

### BACKGROUND OF THE INVENTION

In the prior art it is known an illuminated pet leash where the light source comprises a strip of electroluminescent material. An electroluminescent wire is a thin copper wire coated in a phosphor. Light is produced through electroluminescence when an alternating current provided by a conventional DC battery and an inverter is applied to it.

One of the problems associated with the prior art is that the electroluminescent wire is not flexible enough to be moved smoothly in the spooling device during winding and unwinding. Further, the electroluminescent wire contains a copper wire inside. Each time the copper wire bends or flexes it is stressed. Copper has poor resistance to repeated stressing, even if the stress is kept low. Copper also has very low resistance to shear stress and it will deform.

In the prior art is also known a pet leash such which reflects light pointed to the leash. This kind of leash is not illuminated all the time.

CN 2 867 856 Y discloses an illuminated strap assembly comprising a rotatable strap spool and a light emitting strap structure.

Therefore, there is a need for an illuminated strap assembly which is all the time visible even in poor illumination conditions, is wear-resistant and is reliable to use.

### BRIEF DESCRIPTION OF THE INVENTION

An object of the present invention is to provide an illuminated strap assembly so as to overcome or at least alleviate the prior art disadvantages.

The objects of the invention are achieved by an illuminated retractable strap assembly according to independent claim

The preferred embodiments of the invention are disclosed in the dependent claims.

The invention is based on the idea of an illuminated retractable strap assembly, the assembly comprising a housing, a rotatable strap spool connected rotatably to the housing and arranged not to rotate when the rotatable strap pool rotates, a light emitting strap structure arranged to and fixed to the rotatable strap spool. The light emitting strap structure comprising a first end and a second end. The assembly further comprises a light source connected to the housing. The light source is arranged to radiate light towards the rotatable strap spool and to illuminate the first end of the light emitting strap structure arranged to the rotatable strap spool.

In an embodiment of the invention the assembly comprises a power source electrically connected to the light source, and the power source is connected to the housing.

According to the invention, the strap structure comprises one or more elongated optical fibers having a first end and a second end for transmitting light between the first end and the second end, and an outer covering. The elongated optical fiber comprises a side emitting optical fiber or a side glow optical fiber. In a side emitting fiber the light gradually escapes along the whole length of the fiber through a cladding surrounding the optical fiber core. The outer covering is arranged to pass at least part of the light originating from the one or more elongated optical fibers to be transmitted through.

This reduces longitudinal stresses the one or more elongated optical fibers are subjected.

According to the invention, the assembly comprises a light receiving face arranged to the rotatable strap spool, the light receiving face is arranged to face towards the light source, and the light source is arranged to radiate light onto the light receiving face.

In an embodiment of the invention, the assembly comprises an optic rotary connector for transmitting light from the housing to the rotatable strap spool.

In an embodiment of the invention, the first end of the one or more elongated optical fibers comprises the light receiving face.

This reduces number of components of the assembly.

In an alternative embodiment of the invention, the assembly comprises a light transmitting arrangement having a first end and a second end, the light transmitting arrangement is connected to the rotatable strap spool, the first end of the light transmitting arrangement comprises the light receiving face, and the second end of the light transmitting arrangement illuminates the first end of the one or more elongated optical fibers.

In an embodiment of the invention the assembly comprises a retraction mechanism for retracting the strap structure around the rotatable strap spool.

This eases winding the strap structure around the rotatable strap spool.

In an embodiment of the invention the assembly comprises a first lens. the first lens is arranged between the light source and the light receiving face to focus light from light source onto the light receiving face.

This increases illumination of the strap.

In an embodiment of the invention the rotatable strap spool having a centre of rotation. The light receiving face is arranged to the centre of rotation of the rotatable strap spool.

This increases illumination of the strap.

In an alternative embodiment of the invention the rotatable strap spool having a centre of rotation. The light receiving face is arranged to the rotatable strap spool at a distance from the centre of rotation of the rotatable strap spool.

This eases an installation of the assembly.

In an embodiment of the invention the assembly comprises two or more the light sources connected to the housing at the distance from the centre of rotation of the rotatable strap spool.

This increases illumination of the strap.

In an embodiment of the invention the light source comprises a light-emitting diode or a laser diode.

The power consumption of a light-emitting diode or a laser diode is low.

The light source may provide a blinking light or a steady light. Further, the light source may comprise a multicolor light-emitting diode

In an embodiment of the invention the assembly the power source comprises a rechargeable power source, the rechargeable power source comprises a charging port, and electronics for charging. The charging port and electronics are connected to the housing.

This avoids need for changing batteries.

In an embodiment of the invention the assembly comprises a connector arranged to the second end of the light emitting strap structure.

The connector enables attaching a pet collar or a pet harness to the illuminated strap.

In an embodiment of the invention the housing comprises a grip portion and a support portion for the strap spool. The strap spool is positioned within the support portion and the strap spool is rotatably supported on the support portion.

This increases usability of the assembly.

In an alternative embodiment the rechargeable power source comprises a wireless charging component and electronics for charging.. A wireless charging component may be an induction coil, for instance. The wireless charging component and electronics 13 are connected to the housing.

An advantage of the invention is that the illuminated strap structure is visible even in poor illumination conditions in the surroundings. The invention enables illuminating the strap structure fixed to the rotatable spool without conducting electricity to the rotatable spool. Furthermore, the illuminated strap structure is wear-resistant and the assembly is reliable in a use. Furthermore, the assembly is easy to manufacture.

### BRIEF DESCRIPTION OF THE DRAWINGS

The invention is described in detail by means of specific embodiments with reference to the enclosed drawings, in which
Figures 1a, 1b, 2, 3, 4, and 5 show schematically different embodiments of an illuminate strap assembly according to the present invention;
Figure 6 shows schematically a side view of an illuminated strap assembly comprising a housing with a grip;
Figure 7 shows schematically an elongated optical fiber;
Figures 8a), 8b), 8c) and 8d) show schematically a cross-section of a strap structure; and
Figure 9a), 9b) and 9 c) show schematically a cross-section of a strap structure.

### DETAILED DESCRIPTION OF THE INVENTION

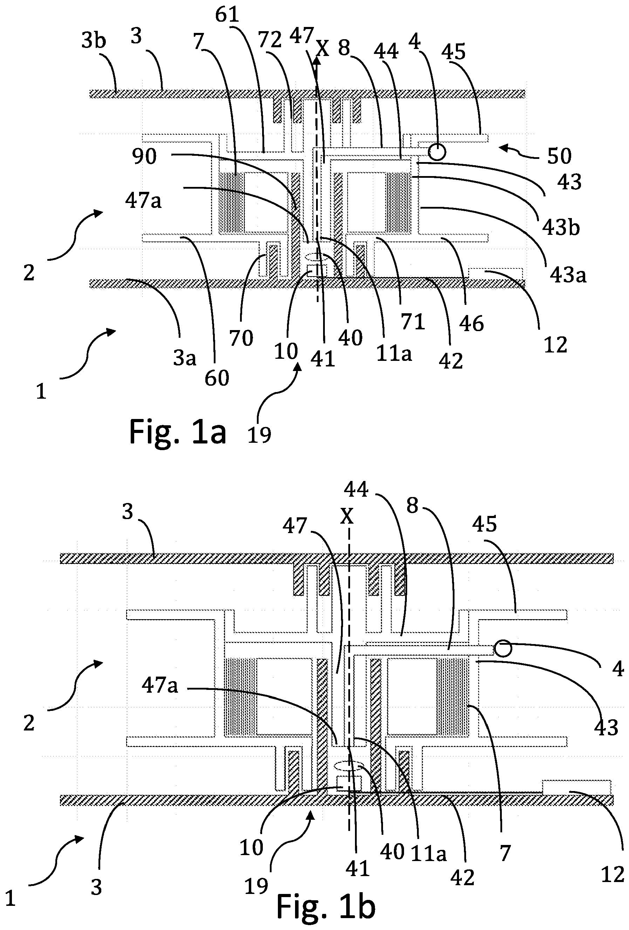

Figure 1a shows one embodiment of an illuminated strap assembly according to the invention. The assembly 1 comprises a rotatable strap spool 2, a housing 3, a light emitting strap structure 4 comprising a first end 5a and a second end 5b and a light source 10. In the Figure 1a the rotatable strap spool 2 is arranged inside a housing 3 and supported to the housing 3. The strap spool 2 can also be supported by an axle. The rotatable strap spool 2 is connected rotatably to the housing 3. In other words the strap spool 2 can be rotated around a centre of rotation X. The light emitting strap structure 4 arranged to and fixed to the rotatable strap spool 2. The light source 10 is connected to the housing 3. In other words the light source 10 does not rotate when the rotatable strap spool 2 rotates. the light source 10 is arranged to radiate light towards the rotatable strap spool 2 and to illuminate the first end 5a of the light emitting strap structure 4 arranged to the rotatable strap spool 2.

In this embodiment the strap structure 4 comprises one or more elongated optical fibers 8 having a first end 11a and a second end 11b and an outer covering 9. The one more elongated optical fibers 8 transmit light between the first end 11a and the second end 11b. The outer covering 9 allows at least part of the light originating from the one or more elongated optical fibers 8 to be transmitted through.

The assembly 1 comprises a light receiving face 41 arranged to the rotatable strap spool 2, the light receiving face 41 faces towards the light source 10, and the light source 10 is arranged to radiate light onto the light receiving face 41. In other words the light source 10 may touch the light receiving face 41 but the light source 10 is not fixed to the light receiving face 41. This means that the light receiving face 41 rotates when the rotatable strap spool 2 rotates but the light source 10 does not rotate.

In one embodiment, a distance between the light source 10 and the light receiving face 41 is stationary.

Anyhow, it should be noted, that due to mechanical tolerances and clearances between parts, the relative position and distance between the light source 10 and the light receiving face 41 may vary slightly.

In this embodiment the first end 11a of the one or more elongated optical fibers 8 comprises the light receiving face 41. In other words the light source 10 radiates light onto a face of the first end 11a of the one or more elongated optical fibers 8.

The rotatable strap spool 2 comprises a first spool part 60 and a second spool part 61. The first spool part 60 further comprises a first strap guide wall 45, a second strap guide wall 46, a strap bottom wall 43 having a first surface 43a and a second surface 43b, a retraction mechanism wall 71 and a first supporting element 70. The strap bottom wall 43 extends between the first strap guide wall 34 and the second strap guide wall 46. The strap bottom wall 43, the first strap guide wall 45 and a second strap guide wall 46 form a strap space 50 for receiving the strap structure 4. The retraction mechanism wall 71 extends from the strap bottom wall 43 towards the centre of rotation X of the rotatable strap spool 2.

The second spool part 61 further comprises a cover wall 44, a cover axle 47 having a first cover axle end 47a and a second supporting element 72.

The strap structure 4 is arranged on the strap bottom wall 43 between the first strap guide wall 45 and the second strap guide wall 46.

The first supporting element 70 and the second supporting element 72 rotatably support the strap spool 2 on the housing 3. The housing 3 comprises a support portion 19 for the first supporting element 70 and the second supporting element 72 of the strap spool 2. The strap spool 2 is positioned within the support portion 19 and the strap spool 2 is rotatably supported on the support portion 19.

The assembly 1 comprises a retraction mechanism 7 for retracting the strap structure 4 around the rotatable strap spool 2. The retraction mechanism 7 can comprise a spring biased element where during unwinding the spring tension increases and any slack of the strap structure 4 is retracted to the strap spool 2. Typically, the retraction mechanism 7 is fixed to the rotatable strap spool and 3 and to the housing 3.

The retraction mechanism 7 is arranged between the retraction mechanism wall 71 and the cover wall 44. The housing 3 comprises further a retraction mechanism fixing portion 90. In this embodiment the housing 3 comprises a first housing outer wall 3a and a second housing outer wall 3b. The second housing outer wall 3b is arranged in the direction of X from the first housing outer wall 3a. X is a line which locates in a rotation axis of the rotatable strap spool 2. In other words X means a centre of rotation of the rotatable strap spool 2. The retraction mechanism fixing portion 90 is connected to the first housing outer wall 3a and the retraction mechanism fixing portion 90 extends between the first housing outer wall 3a and the second housing outer wall 3b. The retraction mechanism 7 is fixed to the housing 3 and to the rotatable strap spool 2. The retraction mechanism 7 is fixed to the retraction mechanism fixing portion 90 and to the strap bottom wall 43.

The second spool part 61 is arranged to fit with the first spool part 60. Typically, the second spool part 61 is attached to the first spool part 60 with a snap fit connector.

In one embodiment the assembly 1 further comprises a first lens 40. The first lens 40 is arranged between the light source 10 and the light receiving face 41 to focus light from light source 10 onto the light receiving face 41.

In one embodiment the first lens 40 is arranged to the housing 3. In other words, the first lens does not to rotate with the rotatable strap spool 2.

In an alternative embodiment the first lens 40 is arranged to the rotatable strap spool 2. In other words, the first lens 40 rotates with the rotatable strap spool 2.

The assembly further comprises a power source 12 electrically connected to the light source 10. The assembly comprises a light source connector 42 for connecting the power source 12 and the light source 10. The power source 12 is connected to the housing 3.

The power source 12 may comprise a rechargeable power source, electronics 13 for charging and a charging port 21. The charging port 21 and electronics 13 are connected to the housing 3.

In this embodiment the one or more elongated optical fibers 8 are arranged uniformly extend to the first cover axle end 47a. The one or more elongated optical fibers 8 are arranged on the cover wall 44 and one or more elongated optical fibers 8 extend from the first surface 43a of the strap bottom wall 43 to the cover axle 47 and inside the cover axle 47 to the first cover axle end 47a.

In this embodiment the cover wall 44, the first housing outer wall 3a, the second housing outer wall 3b, the retraction mechanism wall 71, the first strap guide wall 45 and the second strap guide wall 46 are arranged to transversal direction to the rotation axis of the rotatable strap spool X. The strap bottom wall 43 and the cover axle 47 are arranged to transversal direction to the first housing outer wall 3a.

In this embodiment the light receiving face 41 is arranged to the centre of rotation X of the rotatable strap spool 2.

Figure 1b shows an alternative embodiment of the invention. In this embodiment the one or more elongated optical fibers 8 are arranged uniformly extend to the first cover axle end 47a. The one or more elongated optical fibers 8 are arranged to between the retraction mechanism 7 and the cover wall 44 and one or more elongated optical fibers 8 extend from the first surface 43a of the strap bottom wall 43 to the cover axle 47 and inside the cover axle 47 to the first cover axle end 47a. The other elements of the embodiment of figure 1b corresponds the embodiment of figure 1a.

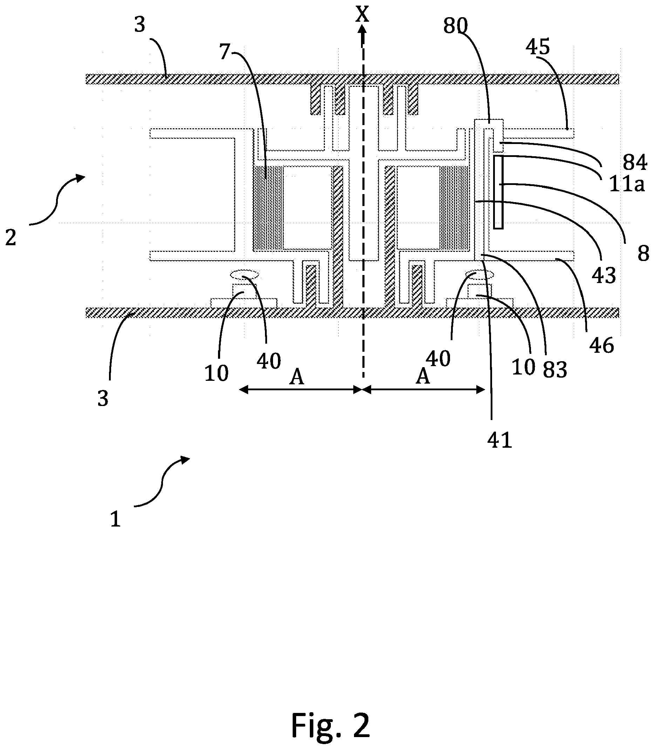

Figure 2 shows an alternative embodiment of the invention. In this embodiment the assembly 1 comprises a light transmitting arrangement 80 having a first end 83 and a second end 84. The light transmitting arrangement 80 is arranged extend uniformly through the first strap guide wall 34 and in the strap bottom wall 43. In this embodiment the light receiving face 41 is arranged to the rotatable strap spool 2 at a distance of A from the centre of rotation X of the rotatable strap spool 2. In one embodiment the assembly 1 comprises two or more the light sources 10 connected to the housing 3 at the distance of A from the centre of rotation X of the rotatable strap spool 2. In alternative embodiment the light source 10 is circular and it radiates light to the light receiving face 4 in all positions of the light receiving face 4.

Alternatively, the one or more elongated optical fibers 8 are arranged to extend through the second strap guide wall 46 (not shown in the figure).

The other elements of the embodiment of figure 2 corresponds the embodiment of figure 1a.

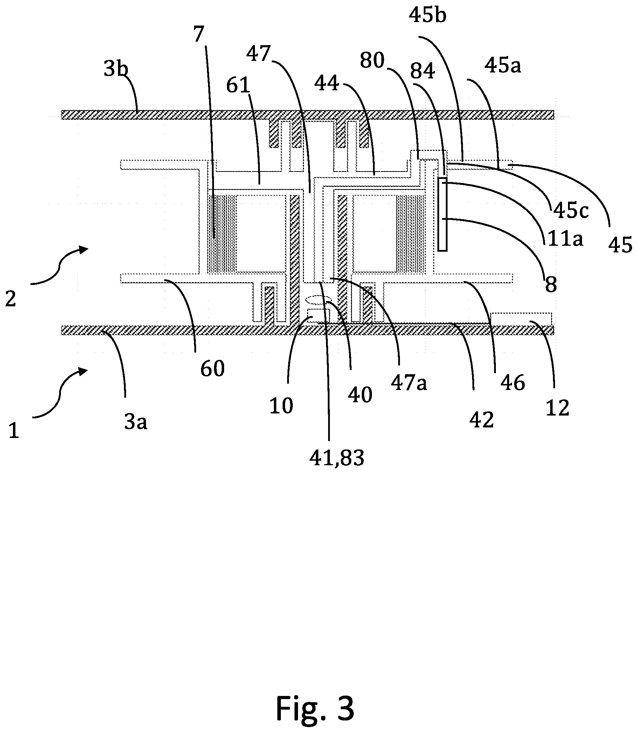

Figure 3 shows an alternative embodiment of the invention. In this embodiment the assembly 1 comprises a light transmitting arrangement 80 having a first end 83 and a second end 84. The light transmitting arrangement 80 is connected to the rotatable strap spool 2. The first end 83 of the light transmitting arrangement 80 comprises the light receiving face 41, and the second end 84 of the light transmitting arrangement 80 illuminates the first end 11a of the one or more elongated optical fibers 8. In other words the light source 10 radiates light onto a face of the light transmitting arrangement 80 in the first end 83 of the light transmitting arrangement 80. The light transmitting arrangement 80 is arranged uniformly extend between the light receiving face 41 and the first end 11a of the one or more elongated optical fibers 8.

The first strap guide wall 45 having an inner first strap guide wall surface 45a and an outer first strap guide wall surface 45b. The light transmitting arrangement 80 is arranged to uniformly extend from the inner first strap guide wall surface 45a into the cover wall 44 and in the cover wall 44 into the cover axle 47 and in the cover axle 47 to the first cover axle end 47a.

In one embodiment the first strap guide wall 45 comprises a light transmitting arrangement opening 45c arranged to receive the second end 84 of the light transmitting arrangement 80.

In one embodiment the light transmitting arrangement 80 is fixed to the second spool part 61 of the rotatable spool 2.

In one embodiment the second end 84 of the light transmitting arrangement 80 is fixed to the first end 11a of the one or more elongated optical fibers 8.

In an alternative embodiment the second end 84 of the light transmitting arrangement 80 radiates light onto the first end 11a of the one or more elongated optical fibers 8.

The other elements of the embodiment of figure 3 corresponds the embodiment of figure 1a.

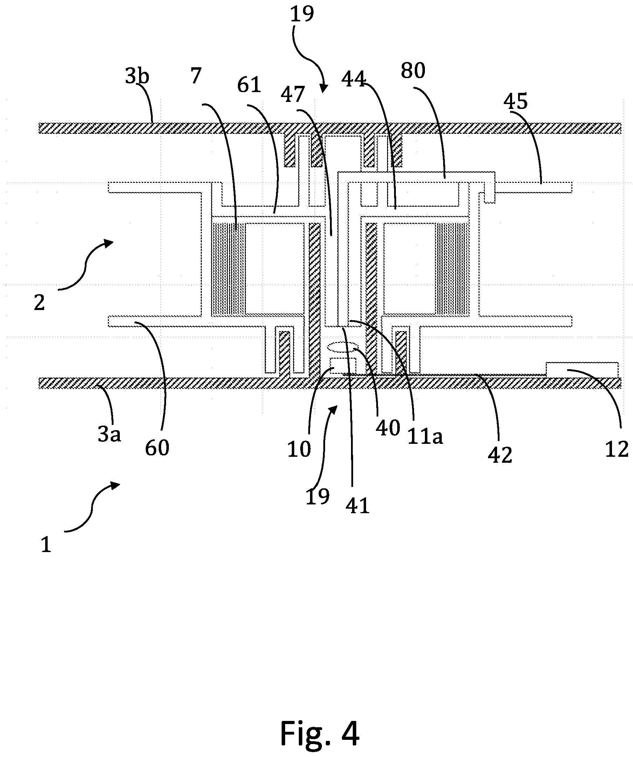

Figure 4 shows an alternative embodiment of the invention. In this embodiment the assembly 1 comprises a light transmitting arrangement 80.

The light transmitting arrangement 80 is arranged to uniformly extend from the inner first strap guide wall surface 45a in a gap between the cover wall 44 and the second housing outer wall 3b into the cover axle 47 and in the cover axle 47 to the first cover axle end 47a.

In other words the light transmitting arrangement 80 is arranged between the cover wall 44 and the second housing outer wall 3b and in the cover axle 47.

The other elements of the embodiment of figure 4 corresponds the embodiment of figure 3.

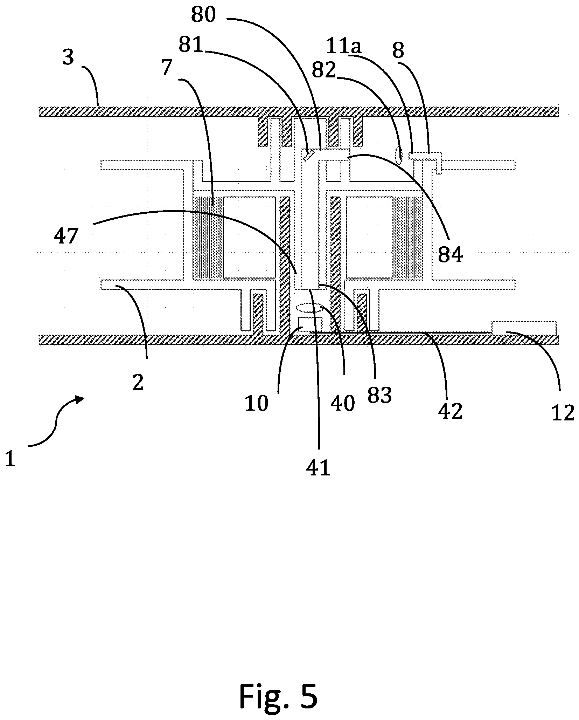

Figure 5 shows an alternative embodiment of the invention. In this embodiment the assembly 1 comprises a light transmitting arrangement 80.

The light transmitting arrangement 80 is arranged to the cover axle 47. The second end 84 of the light transmitting arrangement 80 radiates light onto the first end 11a of the one or more elongated optical fibers 8. The assembly 1 may further comprise a second lens 82 to focus light from the light transmitting arrangement 80 to the first end 11a of the one or more elongated optical fibers 8.

In one embodiment the light transmitting arrangement 80 comprises a mirror element 81. The mirror element 81 is arranged to a corner of the light transmitting arrangement 80.

The other elements of the embodiment of figure 4 corresponds the embodiment of figure 2 and 3.

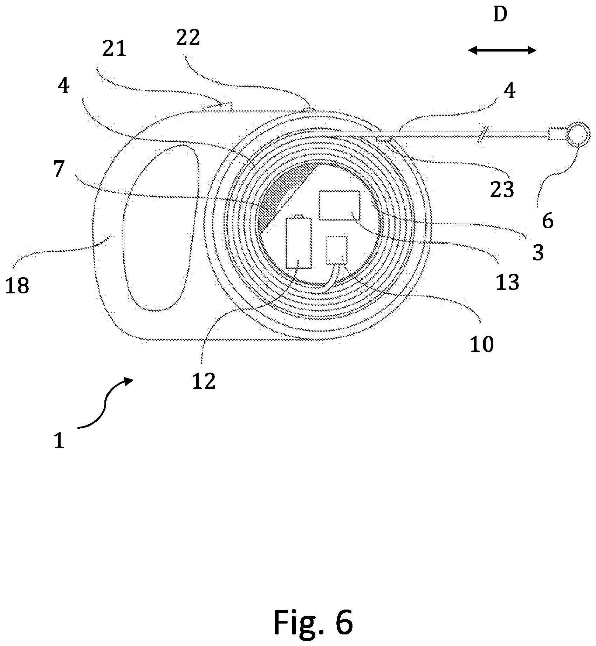

Figure 6 shows an illuminated retractable strap assembly 1 comprising a housing 3 with a grip portion 18 having an opening for fingers. The assembly 1 is a handheld device. The assembly 1 shown in Figure 6 is suitable for an animal tethering device, i.e. a retractable leash for animals.

The assembly 1 comprises a connector 6 arranged to the second end 5b of the light emitting strap structure 4. The connector 6 in the second end 5b of the strap structure 4 is releasably attachable to a pet collar or to a pet harness.

The assembly 1 comprises a rotatable strap spool 2. In the Figure 6 the rotatable strap spool 2 is arranged inside a housing 3 comprising a grip portion 18. The housing 3 comprises a strap opening 23.

The strap structure 4 has a first end 5a which is fixed to the strap spool 2 and a second end 5b which has a connector 6 for connecting the strap structure 4. A retraction mechanism 7 retracts the strap structure 4 around the strap spool 2. The retraction mechanism 7 can comprise a spring biased element where during unwinding the spring tension increases and any slack of the strap structure 7 is retracted to the strap spool 2.

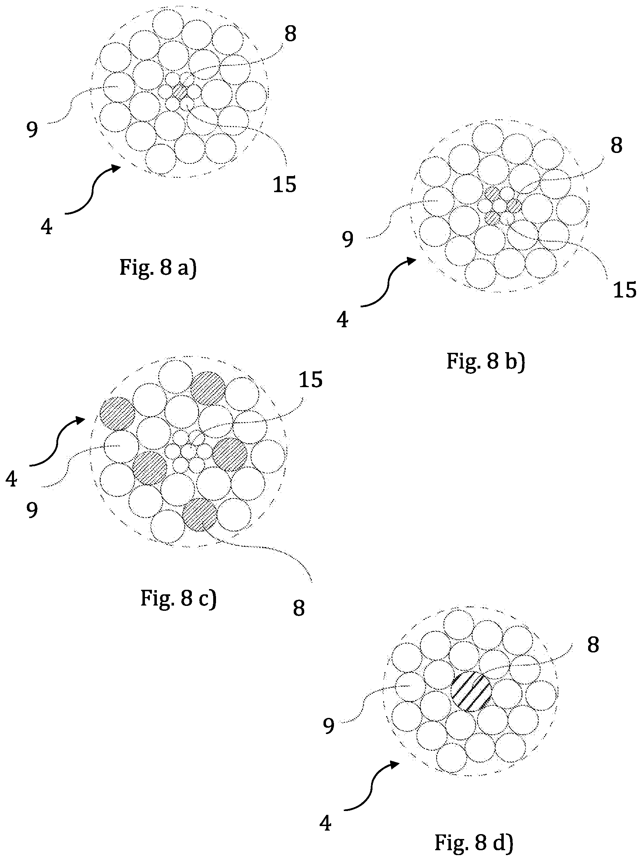

The strap structure 4 comprises one or more elongated optical fibers 8 for transmitting light between a first and a second end of the fibers. The strap structure can be any strap structure 4 described in connection with figures 8a)-8d) and 9a)-9c).

The outer covering 9 allows at least part of the light originating from the one or more elongated optical fibers 8 to be transmitted through.

A light source 10 is arranged to radiate light directly or via the light transmitting arrangement 80 to the first end 11a of the elongated optical fiber 8 for generating light into the elongated optical fiber 8.

A power source 12 is electrically connected to the light source 10 for powering the light source 10 and comprises a rechargeable power source 12 comprising a charging port 21. The light source 10 can be a light-emitting diode or a laser diode, for instance. The assembly 1 comprises electronics 13 for charging the power source and for controlling the light source 10.

The shown assembly 1 comprises the light source 10, the power source 12, and electronics 13 mounted to the housing 3. In other words the light source 10, the power source 12, and electronics 13 do not rotate together with the strap spool 2.

This means that the light source 10 is stationary relative to the housing 3.

Further, this means that the light source 10 and the light emitting strap structure 4 arranged to and fixed to the rotatable strap spool 2 are separate parts.

The light source 10 may be fixedly mounted to the housing 3.

The assembly 1 comprises a button operated stop mechanism for stopping a rotation of the strap spool, and the button is provided on the outer surface of the housing.

The assembly 1 comprises an automatic twilight switch 22 for turning on and turning off the light source 10. The automatic twilight switch 22 is positioned to the upper part of the housing 3b. The automatic twilight switch 22 may also be operated manually to prevent undesired operation.

The assembly 1 comprises an automatic motion sensor 23 for detecting an unwinding and a retraction of the strap structure 4 where the unwinding is turning on and the retraction is turning off the light source 10. The motion sensor 23 can comprise a mechanical switch which is operated by an extension arranged to the strap structure 4 in a vicinity of the second end 5b of the strap structure 4. The motion sensor 23 can further comprise an optical sensor detecting a reflecting material arranged to the strap structure 4 in a vicinity of the second end 5b of the strap structure 4. The motion sensor 23 can also comprise an inductive sensor detecting a metal material arranged to the strap structure 4 in a vicinity of the second end 5b of the strap structure 4.

In one embodiment the assembly 1 comprises a dynamo arranged in connection to the rotatable strap spool 2 for charging the rechargeable power source 12.

Additionally, the assembly may comprise a position detector for changing the colour of the light source 10.

In the figure 6 is described a rechargeable power source 12, a dynamo 24, a stop mechanism 21, an automatic twilight switch 22 and an automatic motion sensor 23. It is to be understood that it is not necessary for an illuminated retractable strap assembly 1 to comprise any of them but the illuminated retractable strap assembly 1 can comprise any of them or any combination of them or all of them.

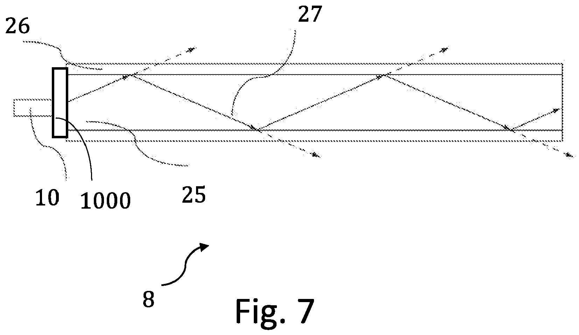

Figure 7 shows an elongated optical fiber 8. The elongated optical fiber 8 is side emitting, i.e. a side glow optical fiber. The elongated optical fiber 8 comprises a core 25 and a cladding 26. A light source 10 is arranged to radiate light directly or via the light transmitting arrangement 80 to the first end 11a of the elongated optical fiber 8 for generating light into the elongated optical fiber 8. A light beam 27 travels in the direction of the core 25 and part of the light is escaping from the side of the elongated optical fiber 8 through the cladding 26. Part of the light is escaping from the second end 11b of the elongated optical fiber 8 which phenomina is called an end glow. The side emitting, i.e. the side glow elongated optical fiber can comprise a plastic optical fiber where the core material is PMMA and the cladding material comprises fluorinated polymers, for instance.

Figure 7 shows an embodiment where the assembly 1 comprises an optic rotary connector 1000 for transmitting light from the housing 3 to the rotatable strap spool 2. The optic rotary connector 1000 is arranged between the light source 10 and the light receiving face 41. The optic rotary connector 1000 may be connected directly to the light source 10 and to the light transmitting arrangement 80.

In an alternative embodiment, the assembly 1 comprises an additional optic fiber between the light source 10 and the optic rotary connector 1000 (not shown in the figure). The optic rotary connector 1000 may be connected to the additional optic fiber and to the light transmitting arrangement 80.

Figure 8a), b), c) and d) show top views in cross-section showing some strap structure 4 examples. The strap structure 4 shown is substantially round in cross-section. The round shape of the strap structure 4 is indicated with a dotted line. The shown strap structures 4 comprise one or more elongated optical fibers 8, elongated flexible strengthening fibers 15 and an outer covering 9, which comprises elongated strands. The elongated strands run in the lengthwise direction of the strap structure 4.

Figure 8a) shows a strap structure 4 where the structure 4 comprises elongated flexible strengthening fibers 15 arranged to surround the one or more elongated optical fibers 8. The one or more elongated optical fibers 8 are arranged in the middle of the strap structure 4. The outer covering 9 is arranged to surround the elongated flexible strengthening fibers 15, where the elongated strands run in the lengthwise direction of the strap structure 4.

Figure 8b) shows a strap structure 4 where the one or more elongated optical fibers 8 and the elongated flexible strengthening fibers 15 are arranged in a free order to the middle part of the strap structure 4. The elongated flexible strengthening fibers 15 and the one or more elongated optical fibers 8 are arranged to form a bundle and the outer covering 9 is arranged to surround the bundle.

Figure 8c) shows a strap structure 4 where the elongated flexible strengthening fibers 15 are arranged in the middle of the strap structure 4. The one or more elongated optical fibers 8 and the elongated strands of the outer covering 9 are arranged in a free order to surround the elongated flexible strengthening fibers 15. In the shown strap structure 4, at least one of the one or more elongated optical fibers 8 is arranged to form a part of the outer surface of the strap structure 4.

Figure 8d) shows a strap structure 4 where the outer covering 9 is arranged to surround the one or more elongated optical fibers 8. The outer covering 9 stretches less in the length direction than the elongated optical fiber 8. The outer covering 9 is transparent or translucent.

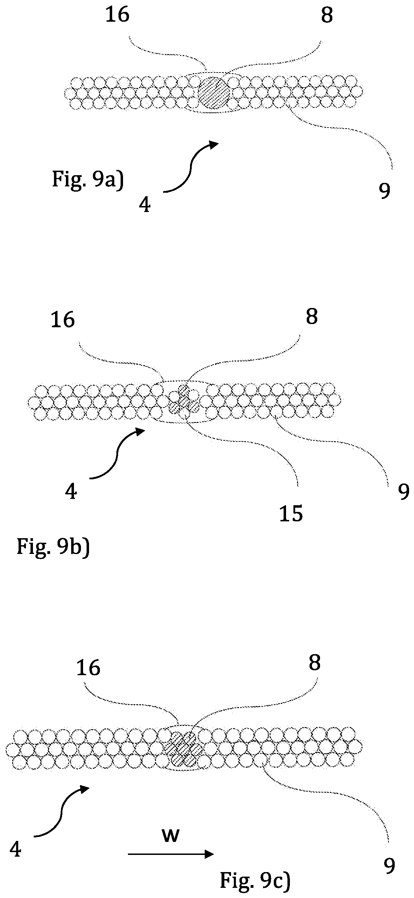

Figure 9a), 9b) and 9c) show a top view in cross-section showing a strap structure 4. The strap structure 4 shown has a substantially flat rectangular shape. The substantially flat rectangular shape is made by the outer covering 9, which comprises elongated strands. In the width direction w of the strap structure 4 the one or more elongated optical fibers 8 are arranged to the central part of the strap structure 4. The both sides of the outer covering 9 extending in the width direction w of the strap structure 4 are connected with a connection material 16. The outer covering 9 may comprise a braided structure.

Figure 9a) shows a strap structure 4 where a one elongated optical fiber 8 is arranged to the central part of the strap structure 4.

Figure 9b) shows a strap structure 4 where the more elongated optical fibers 8 and the elongated flexible strengthening fibers 15 are arranged in a free order to the central part of the strap structure 4.

Figure 3c) shows a strap structure 4 where a bunch of elongated optical fibers 8 is arranged to the central part of the strap structure 4.

The elongated covering strands of the outer covering 9 or part of them in figures 8a)-8d) and 9a)-9c) can comprise reflective material or comprise a reflective surface to further intensify the illumination.

The present invention provides a method for illuminating a strap structure in which an illumination is carried out with a strap assembly comprising a housing 3, a rotatable strap spool 2 connected rotatably to the housing 3, a light emitting strap structure 4 arranged to and fixed to the rotatable strap spool 2. The assembly 1 further comprises a light source connected to the housing 3.

The light source 10 is stationary relative to the housing 3.

The method comprises:
- radiating light from the light source 10 to the rotatable strap spool 2 to illuminate the first end 5a of the light emitting strap structure 4 arranged to the rotatable strap spool 2.

The invention has been described above with reference to the examples shown in the figures. However, the invention is in no way restricted to the above examples but may vary within the scope of the claims.

## Claims

1. An illuminated retractable strap assembly, the assembly (1) comprising
a housing (3),
a rotatable strap spool (2) connected rotatably to the housing (3),
a light emitting strap structure (4) arranged to and fixed to the rotatable strap spool (2), the light emitting strap structure (4) comprising a first end (5a) and a second end (5b), and one or more elongated optical fibers (8) having a first end (11a) and a second end (11b) for transmitting light between the first end (11a) and the second end (11b), and an outer covering (9) arranged to pass at least part of the light originating from the one or more elongated optical fibers (8) to be transmitted through,
wherein the assembly (1) further comprises a light source connected to the housing (3) and arranged not to rotate when the rotatable strap pool (2) rotates, the light source (10) being arranged to illuminate the first end (5a) of the light emitting structure (4), and
a power source (12) connected to the housing (3) and electrically connected to the light source (10), the power source (12) being connected to the housing (3),
**characterized in that**
the light source (10) is arranged to radiate light towards the rotatable strap spool (2);
the first end (5a) of the light emitting strap structure (4) is arranged to the rotatable strap spool (2);
the assembly comprises a light receiving face (41) arranged to the rotatable strap spool (2), the light receiving face (41) facing towards the light source (10); and
the light source (10) is arranged to radiate light onto the light receiving face (41).

2. An illuminated strap assembly according to claim 1, **characterized in that**:
- the first end (11a) of the one or more elongated optical fibers (8) comprises the light receiving face (41).

3. An illuminated strap assembly according to claim 1, **characterized in that**:
- the assembly (1) comprises a light transmitting arrangement (80) having a first end (83) and a second end (84),
- the light transmitting arrangement (80) is connected to the rotatable strap spool (2),
- the first end (83) of the light transmitting arrangement (80) comprises the light receiving face (41), and
- the second end (84) of the light transmitting arrangement (80) illuminates the first end (11a) of the one or more elongated optical fibers (8).

4. An illuminated strap assembly according to any of claims 1 to 3, **characterized in that** the assembly (1) comprises:
- a first lens (40) for focusing light from light source (10) onto the light receiving face (41), the first lens (40) is arranged between the light source (10) and the light receiving face (41); or
- an optic rotary connector (1000) for transmitting light from the housing (3) to the rotatable strap spool (2),

5. An illuminated strap assembly according to any of claims 1 to 4, **characterized in that** the rotatable strap spool (2) having a centre of rotation (X), and:
- the light receiving face (41) is arranged to the centre of rotation (X) of the rotatable strap spool (2); or
- the light receiving face (41) is arranged to rotatable strap spool (2) at a distance of (A) from the centre of rotation (X) of the rotatable strap spool (2).

6. An illuminated strap assembly according to claim 5, **characterized in that**:
- the assembly (1) comprises two or more the light sources (10) connected to the housing (3) at the distance of (A) from the centre of rotation (X) of the rotatable strap spool (2).

7. An illuminated strap assembly according to any of claims 1 to 6, **characterized in that**:
- the light source (10) comprises a light-emitting diode or a laser diode.

8. An illuminated strap assembly according to any of claims 1 to 7, **characterized in that** the assembly (1) comprises a connector (6) arranged to the second end (5b) of the light emitting strap structure (4).

9. An illuminated strap assembly according to any of claims 1 to 8, **characterized in that** the assembly (1) comprises a retraction mechanism (7) for retracting the strap structure (4) around the rotatable strap spool (2).

10. An illuminated strap assembly according to any one of claims 1 to 9, **characterized in that** the assembly (1) comprises:
- the power source (12) comprises a rechargeable power source,
- the rechargeable power source comprises a charging port (21),
- electronics (13) for charging, and
- the charging port and electronics (13) are connected to the housing (3); or
- the power source (12) comprises a rechargeable power source,
- the rechargeable power source comprises a wireless charging component,
- electronics (13) for charging, and
- the wireless charging component and electronics (13) are connected to the housing (3).

11. An illuminated strap assembly according to any of claims 1 to 10, **characterized in that**:
- a housing (3) comprising a grip portion (18) and a support portion (19) for the strap spool (2),
- the strap spool (2) is positioned within the support portion (19) and the strap spool (2) is rotatably supported on the support portion (19).

## Patentansprüche

1. Beleuchtete, einziehbare Riemenanordnung, wobei die Anordnung (1) umfasst
ein Gehäuse (3),
eine drehbare Riemenspule (2), die drehbar mit dem Gehäuse (3) verbunden ist,
eine lichtemittierende Riemenstruktur (4), die an der drehbaren Riemenspule (2) angeordnet und befestigt ist, wobei die lichtemittierende Riemenstruktur (4) ein erstes Ende (5a) und ein zweites Ende (5b) und eine oder mehrere längliche optische Fasern (8) umfasst, die ein erstes Ende (11a) und ein zweites Ende (11b) zum Übertragen von Licht zwischen dem ersten Ende (11a) und dem zweiten Ende (11b) aufweisen, und eine äußere Abdeckung (9), die angeordnet ist, um mindestens einen Teil des von der einen oder den mehreren länglichen optischen Fasern (8) stammenden Lichts, das dadurch zu übertragen ist, durchzulassen,
wobei die Anordnung (1) weiter eine Lichtquelle umfasst, die mit dem Gehäuse (3) verbunden und angeordnet ist, um sich nicht zu drehen, wenn sich die drehbare Riemenspule (2) dreht, wobei die Lichtquelle (10) angeordnet ist, um das erste Ende (5a) der lichtemittierenden Struktur (4) zu beleuchten, und
eine Leistungsquelle (12), die mit dem Gehäuse (3) verbunden ist und elektrisch mit der Lichtquelle (10) verbunden ist, wobei die Leistungsquelle (12) mit dem Gehäuse (3) verbunden ist,
**dadurch gekennzeichnet, dass**
die Lichtquelle (10) angeordnet ist, um Licht zu der drehbaren Riemenspule (2) hin zu strahlen;
das erste Ende (5a) der lichtemittierenden Riemenstruktur (4) an der drehbaren Riemenspule (2) angeordnet ist;
die Anordnung eine Lichtempfangsfläche (41) umfasst, die an der drehbaren Riemenspule (2) angeordnet ist, wobei die Lichtempfangsfläche (41) der Lichtquelle (10) zugewandt ist; und
die Lichtquelle (10) angeordnet ist, um Licht auf die Lichtempfangsfläche (41) zu strahlen.

2. Beleuchtete Riemenanordnung nach Anspruch 1, **dadurch gekennzeichnet, dass**:
- das erste Ende (11a) der einen oder der mehreren länglichen optischen Fasern (8) die Lichtempfangsfläche (41) umfasst.

3. Beleuchtete Riemenanordnung nach Anspruch 1, **dadurch gekennzeichnet, dass**:
- die Anordnung (1) eine Lichtübertragungsanordnung (80) umfasst, die ein erstes Ende (83) und ein zweites Ende (84) aufweist,
- die Lichtübertragungsanordnung (80) mit der drehbaren Riemenspule (2) verbunden ist,
- das erste Ende (83) der Lichtübertragungsanordnung (80) die Lichtempfangsfläche (41) umfasst, und
- das zweite Ende (84) der Lichtübertragungsanordnung (80) das erste Ende (11a) der einen oder mehreren länglichen optischen Fasern (8) beleuchtet.

4. Beleuchtete Riemenanordnung nach einem der Ansprüche 1 bis 3, **dadurch gekennzeichnet, dass** die Anordnung (1) umfasst:
- eine erste Linse (40) zum Fokussieren von Licht aus der Lichtquelle (10) auf die Lichtempfangsfläche (41), wobei die erste Linse (40) zwischen der Lichtquelle (10) und der Lichtempfangsfläche (41) angeordnet ist; oder
- einen optischen Drehverbinder (1000) zum Übertragen von Licht vom Gehäuse (3) zur drehbaren Riemenspule (2).

5. Beleuchtete Riemenanordnung nach einem der Ansprüche 1 bis 4, **dadurch gekennzeichnet, dass** die drehbare Riemenspule (2) einen Drehpunkt (X) aufweist, und:
- die Lichtempfangsfläche (41) am Drehzentrum (X) der drehbaren Riemenspule (2) angeordnet ist; oder
die Lichtempfangsfläche (41) in einem Abstand (A) vom Drehzentrum (X) an der drehbaren Riemenspule (2) der drehbaren Riemenspule (2) angeordnet ist.

6. Beleuchtete Riemenanordnung nach Anspruch 5, **dadurch gekennzeichnet, dass**:
- die Anordnung (1) zwei oder mehr der Lichtquellen (10) umfasst, die im Abstand (A) vom Drehzentrum (X) der drehbaren Riemenspule (2) mit dem Gehäuse (3) verbunden sind.

7. Beleuchtete Riemenanordnung nach einem der Ansprüche 1 bis 6, **dadurch gekennzeichnet, dass**:
- die Lichtquelle (10) eine Leuchtdiode oder eine Laserdiode umfasst.

8. Beleuchtete Riemenanordnung nach einem der Ansprüche 1 bis 7, **dadurch gekennzeichnet, dass** die Anordnung (1) einen Verbinder (6) umfasst, der am zweiten Ende (5b) der lichtemittierenden Riemenstruktur (4) angeordnet ist.

9. Beleuchtete Riemenanordnung nach einem der Ansprüche 1 bis 8, **dadurch gekennzeichnet, dass** die Anordnung (1) einen Rückzugmechanismus (7) zum Zurückziehen der Riemenstruktur (4) um die drehbare Riemenspule (2) herum umfasst.

10. Beleuchtete Riemenanordnung nach einem der Ansprüche 1 bis 9, **dadurch gekennzeichnet, dass** die Anordnung (1) umfasst:
- die Leistungsquelle (12) umfasst eine wiederaufladbare Leistungsquelle,
- die wiederaufladbare Leistungsquelle umfasst einen Ladeanschluss (21),
- Elektronik (13) zum Laden, und
- der Ladeanschluss und die Elektronik (13) sind mit dem Gehäuse (3) verbunden; oder
- die Leistungsquelle (12) umfasst eine wiederaufladbare Leistungsquelle,
- die wiederaufladbare Leistungsquelle umfasst eine drahtlose Ladekomponente,
- Elektronik (13) zum Laden, und
- die drahtlose Ladekomponente und die Elektronik (13) sind mit dem Gehäuse (3) verbunden.

11. Beleuchtete Riemenanordnung nach einem der Ansprüche 1 bis 10, **dadurch gekennzeichnet, dass**:
- ein Gehäuse (3), das einen Griffabschnitt (18) und einen Trägerabschnitt (19) für die Riemenspule (2) umfasst,
- die Riemenspule (2) innerhalb des Trägerabschnitts (19) positioniert ist und die Riemenspule (2) drehbar auf dem Trägerabschnitt (19) getragen wird.

## Revendications

1. Ensemble sangle rétractable éclairée, l'ensemble (1) comprenant
un boîtier (3),
un enrouleur de sangle rotatif (2) relié de manière rotative au boîtier (3),
une structure de sangle émettrice de lumière (4) agencée et fixée à l'enrouleur de sangle rotatif (2), la structure de sangle émettrice de lumière (4) comprenant une première extrémité (5a) et une seconde extrémité (5b), et une ou plusieurs fibres optiques allongées (8) présentant une première extrémité (11a) et une seconde extrémité (11b) pour transmettre la lumière entre la première extrémité (11a) et la seconde extrémité (11b), et un revêtement extérieur (9) agencé pour laisser passer au moins une partie de la lumière provenant des une ou plusieurs fibres optiques allongées (8) à transmettre à travers celles-ci,
dans lequel l'ensemble (1) comprend en outre une source de lumière reliée au boîtier (3) et agencée pour ne pas tourner lorsque l'enrouleur de sangle rotatif (2) tourne, la source de lumière (10) étant agencée pour éclairer la première extrémité (5a) de la structure émettrice de lumière (4), et
une source d'énergie (12) connectée au boîtier (3) et connectée électriquement à la source de lumière (10), la source d'énergie (12) étant connectée au boîtier (3),
**caractérisé en ce que**
la source de lumière (10) est agencée pour émettre de la lumière vers l'enrouleur de sangle rotatif (2) ;
la première extrémité (5a) de la structure de sangle émettrice de lumière (4) est agencée sur l'enrouleur de sangle rotatif (2) ;
l'ensemble comprend une face de réception de lumière (41) agencée sur l'enrouleur de sangle rotatif (2), la face de réception de lumière (41) étant tournée vers la source de lumière (10) ; et
la source de lumière (10) est agencée pour émettre de la lumière sur la face de réception de lumière (41).

2. Ensemble sangle éclairée selon la revendication 1, **caractérisé en ce que** :
- la première extrémité (11a) des une ou plusieurs fibres optiques allongées (8) comprend la face de réception de lumière (41).

3. Ensemble sangle éclairée selon la revendication 1, **caractérisé en ce que** :
- l'ensemble (1) comprend un agencement de transmission de lumière (80) présentant une première extrémité (83) et une seconde extrémité (84),
- l'agencement de transmission de lumière (80) est relié à l'enrouleur de sangle rotatif (2),
- la première extrémité (83) de l'agencement de transmission de lumière (80) comprend la face de réception de lumière (41), et
- la seconde extrémité (84) de l'agencement de transmission de lumière (80) éclaire la première extrémité (11a) des une ou plusieurs fibres optiques allongées (8).

4. Ensemble sangle éclairée selon l'une quelconque des revendications 1 à 3, **caractérisé en ce que** l'ensemble (1) comprend :
- une première lentille (40) pour concentrer la lumière provenant de la source de lumière (10) sur la face de réception de lumière (41), la première lentille (40) est agencée entre la source de lumière (10) et la face de réception de lumière (41) ; ou
- un connecteur optique rotatif (1000) pour transmettre la lumière du boîtier (3) à l'enrouleur de sangle rotatif (2).

5. Ensemble sangle éclairée selon l'une quelconque des revendications 1 à 4, **caractérisé en ce que** l'enrouleur de sangle rotatif (2) présente un centre de rotation (X), et :
- la face de réception de lumière (41) est agencée au centre de rotation (X) de l'enrouleur de sangle rotatif (2) ; ou
la face de réception de lumière (41) est agencée sur l'enrouleur de sangle rotatif (2) à une distance de (A) du centre de rotation (X) de l'enrouleur de sangle rotatif (2).

6. Ensemble sangle éclairée selon la revendication 5, **caractérisé en ce que** :
- l'ensemble (1) comprend deux sources de lumière (10), ou plus, reliées au boîtier (3) à la distance de (A) du centre de rotation (X) de l'enrouleur de sangle rotatif (2).

7. Ensemble sangle éclairée selon l'une quelconque des revendications 1 à 6, **caractérisé en ce que** :
- la source de lumière (10) comprend une diode électroluminescente ou une diode laser.

8. Ensemble sangle éclairée selon l'une quelconque des revendications 1 à 7, **caractérisé en ce que** l'ensemble (1) comprend un connecteur (6) agencé sur la seconde extrémité (5b) de la structure de sangle émettrice de lumière (4).

9. Ensemble sangle éclairée selon l'une quelconque des revendications 1 à 8, **caractérisé en ce que** l'ensemble (1) comprend un mécanisme de rétraction (7) pour rétracter la structure de sangle (4) autour de l'enrouleur de sangle rotatif (2).

10. Ensemble sangle éclairée selon l'une quelconque des revendications 1 à 9, **caractérisé en ce que** l'ensemble (1) comprend :
- la source d'énergie (12) comprend une source d'énergie rechargeable,
- la source d'énergie rechargeable comprend un port de charge (21),
- une électronique (13) pour la charge, et
- le port de charge et l'électronique (13) sont connectés au boîtier (3) ; ou
- la source d'énergie (12) comprend une source d'énergie rechargeable,
- la source d'énergie rechargeable comprend un composant de charge sans fil,
- une électronique (13) pour la charge, et
- le composant de charge sans fil et l'électronique (13) sont connectés au boîtier (3).

11. Ensemble sangle éclairée selon l'une quelconque des revendications 1 à 10, **caractérisé en ce que** :
- un boîtier (3) comprenant une partie de préhension (18) et une partie de support (19) pour l'enrouleur de sangle (2),
- l'enrouleur de sangle (2) est positionné à l'intérieur de la partie de support (19) et l'enrouleur de sangle (2) est supporté de manière rotative sur la partie de support (19).
